(19) Europäisches Patentamt
European Patent Office
Office européen des brevets

(11) Publication number: 0 124 122
B1

(12) # EUROPEAN PATENT SPECIFICATION

(45) Date of publication of patent specification: 30.12.86

(51) Int. Cl.$^4$: C 10 G 11/05, C 10 G 47/34, B 01 J 29/08

(21) Application number: 84104845.7

(22) Date of filing: 30.04.84

(54) **Catalytic cracking catalyst and process.**

(30) Priority: 02.05.83 US 490965

(43) Date of publication of application:
07.11.84 Bulletin 84/45

(45) Publication of the grant of the patent:
30.12.86 Bulletin 86/52

(84) Designated Contracting States:
AT BE CH DE FR GB IT LI LU NL SE

(56) References cited:
GB-A-1 214 705
GB-A-1 305 781
GB-A-1 430 973
GB-A-2 007 107
US-A-4 359 378

(73) Proprietor: UNION CARBIDE CORPORATION
39 Old Ridgebury Road
Danbury Connecticut 06817 (US)

(72) Inventor: Pellet, Regis Joseph
31 Wolf Road
Croton-on-Hudson New York 10520 (US)
Inventor: Best, Donald Francis
McNair Drive R.D. 9, Box 427
Mahopac New York 10541 (US)
Inventor: Long, Gary Norman
Birch Hill Road
Putnam Valley New York 10579 (US)
Inventor: Rabo, Jule Anthony
19 Windmill Road
Armonk New York 10504 (US)
Inventor: Wolynic, Edward Thomas
15 Herkimer Road
Scarsdale New York 10583 (US)

(74) Representative: Eggert, Hans-Gunther, Dr.
Räderscheidtstrasse 1
D-5000 Köln 41 (DE)

EP 0 124 122 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Field of the invention

The present invention relates to cracking catalysts derived from novel zeolitic aluminosilicates set forth in U.S. Pat. No. 4,503,023 and to the process of their use.

Background of the invention

The prior art dealing with catalytic cracking catalysts is voluminous with a basic goal being the preparation of modified zeolites for use as cracking catalysts. The following patents are representative of the prior art.

The use of conversion catalysts formed from a zeolite dispersed in a siliceous matrix has been disclosed in U.S. Pat. No. 3,140,249 and U.S. Pat. No. 3,352,796.

The use of blended matrix components, e.g., a catalyst comprising a zeolite, an inorganic oxide matrix and inert fines, which may be alpha alumina, is disclosed in U.S. Pat. No. 3,312,615. Catalysts comprising an amorphous silica-alumina, separately added alumina and a zeolite are disclosed in U.S. Pat. No. 3,542,670 and catalyst comprising a zeolite, an amorphous hydrous alumina and alumina monohydrate are disclosed in U.S. Pat. No. 3,428,550.

It has been disclosed that the steam and thermal stability of zeolites can be improved by the use of zeolites having a low level of alkali metal content and a unit cell size less than about $24.45 \times 10^{-4}$ µm (27.75 Å) (See: U.S. Pat. Nos. 3,293,192 and Re. 28,629 (Reissue of U.S. Pat. No. 3,402,996)).

Further, it has been disclosed (U.S. Pat. No. 3,591,488) that the hydrogen or ammonium form of a zeolite may be treated with $H_2O$ at a temperature ranging from about 427°C (800°F) to about 816°C (1500°F), and then subsequently cation exchange the steam and water treated zeolite with cations which may be rare earth metal cations. The method increases the silica to alumina mole ratio of the zeolite and also the defect structure. U.S. Pat. No. 3,676,368 discloses a rare earth exchanged-hydrogen faujasite containing from 6 to 14 percent rare earth oxides. U.S. Pat. No. 3,957,623 discloses a rare earth exchanged zeolite having a total of 1 to 10 weight percent rare earth metal oxide. U.S. Pat. No. 3,607,043 discloses a process for preparing a zeolite having a rare earth content of 0.3 to 10 weight percent.

U.S. Pat. No. 4,036,739 discloses hydrothermally stable and ammonia stable Y zeolite in which a sodium Y zeolite is ion exchanged to partially exchange sodium ions for ammonium ions, followed by steam calcination and a further ion exchange with ammonium to reduce the final sodium oxide content to below 1 weight percent, followed by calcination of the reexchanged product, or according to U.S. Pat. No. 3,781,199, the second calcination may be conducted after the zeolite is admixed with a refractory oxide.

Summary of the invention

The process for the catalytic cracking of a crude oil derived feedstock to produce lower boiling hydrocarbons which comprises contacting said feedstock with a zeolitic aluminosilicate which has a mole ratio of oxide in the dehydrated state of

$$(0.85-1.1)M_{2/n}O:Al_2O_3:x\ SiO_2$$

wherein M is a cation having a valence of "n"; x has a value greater than 6; having a X-ray powder diffraction pattern having at least the d-spacings of Table A; having extraneous silicon atoms in the crystal lattice in the form of framework $SiO_4$ tetrahedra, wherein said aluminosilicate has been heated for an effective temperature and for effective time in the presence of an effective amount of steam and/or has been ion-exchanged with at least one multivalent cation as hereinafter described.

Detailed description of the invention

The present invention relates to new catalytic cracking catalysts, their method of preparation and to the process of their use in catalytic cracking processes.

The catalytic cracking catalysts of the instant invention are derived from a novel class of zeolitic aluminosilicates denominated LZ-210 in U.S. Pat. No. 4,503,023 said application being incorporated herein by reference thereto.

It has been discovered that LZ-210 may be treated, e.g., hydrothermal treatment and/or ion-exchange with a multivalent cation, preferably rare earth cations, to give catalytic cracking catalysts which have improved catalytic activity and selectivity to desired lower boiling hydrocarbon products.

The catalysts of the present invention will be referred to herein, solely for the purpose of reference herein, as (1) LZ-210-T and (2) LZ-210-M to denominate, respectively (1) an LZ-210 catalyst which has been subjected to a thermal treatment, including a hydrothermal treatment, and (2) an LZ-210 catalyst which has been subjected to a treatment with a multivalent cation and, optionally, thermal treatment. Other components may be provided with LZ-210-T and LZ-210-M to provide the final catalytic cracking catalyst and exemplary of such other components will be discussed hereinafter.

LZ-210-T and LZ-210-M are prepared using LZ-210 as described in U.S. Pat. No. 4,503,023 above mentioned with a general description of LZ-210 being as follows:

LZ-210

Aluminosilicates having in the dehydrated state, a chemical composition expressed in terms of mole ratios of oxides as

$$(0.85-1.1)M_{2/n}O:Al_2O_3:x\ SiO_2$$

wherein "M" is a cation having the valence "n"; and "x" has a value greater than 6; having an X-ray powder diffraction pattern having at least the d-spacings set forth in Table A, below; and having extraneous silicon atoms in its crystal lattice in the form of $SiO_4$ tetrahedra, preferably in an average amount of at least 1.0 per $10^{-8}$ $\mu m^3$ (10.000 $Å^3$).

For purposes of reference herein the framework composition is best expressed in terms of mole fractions of framework tetrahedra $TO_2$. The starting zeolite may be expressed as:

$$(Al_aSi_b\square_z)O_2$$

whereas "a" is the mole fraction of aluminum tetrahedra in the framework; "b" is the mole fraction of silicon tetrahedra in the framework; □ denotes defect sites and "z" is the mole fraction of defect sites in the zeolite framework. In many cases the "z" value for the starting zeolite is zero and the defect sites are simply eliminated from the expression. Numerically the sum of the values a+b+z=1.

The zeolite product of the fluorosilicate treatment, expressed in terms of mole fraction of framework tetrahedra ($TO_2$) will have the form

$$[Al_{(a-N)}Si_{b+(N-\Delta z)}\square_z]O_2$$

wherein: "N" is defined as the mole fraction of aluminum tetrahedra removed from the framework during the treatment; "a" is the mole fraction of aluminum tetrahedra present in the framework of the starting zeolite; "b" is the mole fraction of silicon tetrahedra present in the framework of the starting zeolite; "z" is the mole fraction of defect sites in the framework; (N−Δz) is the mole fraction increase in silicon tetrahedra resulting from the fluoro-silicate treatment; "Δz" is the net change in the mole fraction of defect sites in the zeolite framework resulting from the treatment Δz=z (product zeolite)−z (starting zeolite) The term "Defect Structure Factor" for any given zeolite is equivalent to the "z" value of the zeolite. The net change in Defect Structure Factors between the starting zeolite and the product zeolite is equivalent to "Δz". Numerically, the sum of the values:

$$(a-N)+[b+(N-\Delta z)]+z=1$$

A subclass of the above LZ-210 compositions, i.e. those which are characterized by having both high molar $SiO_2/Al_2O_3$ ratios and low Defect Structure Factors (as hereinafter discussed), can be defined as having a chemical composition expressed in terms of mole fractions of framework tetrahedra as:

$$[Al_{(a-N)}Si_{b+(N-\Delta z)}\square_z]O_2$$

wherein: the mole fraction of aluminum removed from the framework of the starting zeolite is "N";

$$\frac{b+(N-\Delta z)}{a-N}$$

has a value greater than 6; the change in defect structure factor Δz is less than 0.08 and preferably less than 0.05; an increased silicon content in the framework,

$$\frac{(N-\Delta z)}{N},$$

of at least 0.5; and a cation equivalent expressed as a monovalent cation species, $M^+/Al$, from 0.85 to 1.1 and the characteristic crystal structure of zeolite Y as indicated by an X-ray powder diffraction pattern having at least the d-spacings set forth broadly in Table A.

TABLE A

| $d(10^{-4}\ \mu m)$ | Intensity |
|---|---|
| 14.3 —13.97 | very strong |
| 8.71— 8.55 | medium |
| 7.43— 7.30 | medium |
| 5.66— 5.55 | strong |
| 4.75— 4.66 | medium |
| 4.36— 4.28 | medium |
| 3.75— 3.69 | strong |
| 3.30— 3.23 | strong |
| 2.85— 2.79 | strong |

Zeolite LZ-210 as defined above will have cubic unit cell dimension, $a_0$, of less than $24.61\times10^{-4}$ µm (27.61 Angstroms), preferably from 24.20 to $24.61\times10^{-4}$ µm and, an adsorption capacity for water vapor at 25°C and 613.28 Pa (4.6 Torr) water vapor pressure of at least 20 weight percent based on the anhydrous weight of the zeolite, and preferably an oxygen adsorption capacity at 13332 Pa (100 Torr) and −183°C of at least 25 weight percent.

LZ-210 can be prepared by a method which removes framework aluminum from a zeolite having $SiO_2/Al_2O_3$ molar ratios of about 3 or greater and substituting therefor silicon from a source extraneous to the starting zeolite. By such a procedure it is possible to create more highly siliceous zeolite species which have the same crystal structure as would result by direct synthesis if such synthesis method were known. The process disclosed in copending U.S. Pat. No. 4,503,023 comprises contacting a crystalline zeolite having pore diameters of at least about $3\times10^{-4}$ µm and having a molar $SiO_2/Al_2O_3$ ratio of at least 3, with a fluorosilicate salt, preferably in an amount of at least 0.0075 moles per 100 grams of zeolite starting material, said fluorosilicate salt being in the from of an aqueous solution having a pH value in the range of 3 to about 7, preferably 5 to about 7, and brought into contact with the zeolite either incrementally or continuously at a slow rate whereby framework aluminum atoms of the zeolite are removed and replaced by extraneous silicon atoms from the added fluorosilicate.

LZ-210 can be prepared from a conventionally prepared zeolite Y which has a molar $SiO_2/Al_2O_3$ ratio of less than 6 by using the above process to increase the $SiO_2/Al_2O_3$ ratio greater than 6. A preferred procedure comprises:

(a) providing a zeolite Y composition having a molar $SiO_2/Al_2O_3$ ratio less than that of the final product;

(b) contacting and reacting at a temperature of from 20 to 95°C, said zeolite Y with a fluorosilicate, preferably ammonium fluorosilicate. The fluorosilicate solution, being in the form of an aqueous solution at a pH in the range of 5 to about 7, is brought into contact with the zeolite either incrementally or continuously at a slow rate such that a sufficient proportion of the framework aluminum atoms removed are replaced by silicon atoms to retain at least 80 percent, preferably at least 90 percent, of the crystal structure of the starting zeolite Y; and

(c) isolating the zeolite having an enhanced framework silicon content from the reaction mixture.

The starting zeolite Y composition can be synthesized by any of the processes well known in the art. A representative process is disclosed in US—A—3,130,007.

For reasons more fully explained hereinafter, it is necessary that the starting zeolite be able to withstand the initial loss of framework aluminum atoms to at least a modest degree without collapse of the crystal structure unless the process is to be carried out at a very slow pace. Accordingly it is preferred that the $SiO_2/Al_2O_3$ ratio of the starting zeolite be at least 3.0. Also it is preferred that at least about 50, and more preferably at least 95%, of the $AlO_4^-$ tetrahedra of the naturally occurring or as-synthesized zeolite are present in the starting zeolite. Most advantageously the starting zeolite contains as many as possible of its original $AlO_4^-$ tetrahedra, i.e. has not been subjected to any post-formation treatment which either extensively removes aluminum atoms from their original framework sites or converts them from the normal conditions of 4-fold coordination with oxygen.

The cation population of the starting zeolite is not a critical factor insofar as substitution of silicon for framework aluminum is concerned, but since the substitution mechanism involves the *in situ* formation of salts of at least some of the zeolitic cations, it is advantageous that these salts be water-soluble to a substantial degree to facilitate their removal from the silica-enriched zeolite product. It is found that ammonium cations for the most soluble salt in this regard and it is accordingly preferred that at least 50 percent, most preferably 85 or more percent, of the zeolite cations be ammonium cations. Sodium and

potassium, two of the most common original cations in zeolites are found to form $Na_3AlF_6$ and $K_3AlF_6$ respectively, both of which are only very sparingly soluble in either hot or cold water. When these compounds are formed as precipitates within the structural cavities of the zeolite they are quite difficult to remove by water washing. Their removal, moreover, is important if thermal stability of the zeolite product is desired since the substantial amounts of fluoride can cause crystal collapse at temperatures as low as 500°C.

The fluorosilicate salt used as the aluminum extractant and also as the source of extraneous silicon which is inserted into the zeolite structure in place of the extracted aluminum can be any of the fluorosilicate salts having the general formula

$$(A)_{2/b}SiF_6$$

wherein A is preferably a metallic or non-metallic cation other than $H^+$ having the valence "b". Cations represented by "A" are alkylammonium, $NH^+_4$, $H^+$, $Mg^{++}$, $Li^+$, $Na^+$, $K^+$, $Ba^{++}$, $Cd^{++}$, $Cu^+$, $Cu^{++}$, $Ca^{++}$, $Cs^+$, $Fe^{++}$, $Co^{++}$, $Pb^{++}$, $Mn^{++}$, $Rb^+$, $Ag^+$, $Sr^{++}$, $Tl^+$ and $Zn^{++}$. The ammonium cation form of the fluorosilicate is highly preferred because of its substantial solubility in water and also because the ammonium cations form water soluble by-product salts upon reaction with the zeolite, namely $(NH_4)_3AlF_6$.

In certain respects, the manner in which the fluorosilicate and starting zeolite are brought into contact and the overall process of substituting silicon for aluminum in the zeolite framework is a two step process in which the aluminum extraction step will, unless controlled, proceed very rapidly while the silicon insertion is relatively very slow. If dealumination becomes too extensive without silicon substitution, the crystal structure becomes seriously degraded and ultimately collapses. While we do not wish to be bound by any particular theory, it appears that the fluoride ion is the agent for the extraction of framework aluminum in accordance with the equation

$(NH_4)_2SiF_6$ (soln)+ 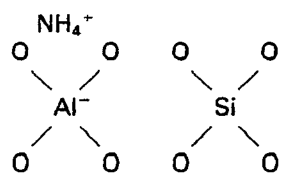 $+(NH_4)_3AlF_6$ (soln)

Zeolite Zeolite

It is, therefore essential that the initial dealumination step be inhibited and the silicon insertion step be promoted to achieve the desired zeolite product. It is found that the various zeolite species have varying degrees of resistance toward degradation as a consequence of framework aluminum extraction without silicon substitution. In general the rate of aluminum extraction is decreased as the pH of the fluorosilicate solution in contact with the zeolite is increased within the range of 3 to 7, and as the concentration of the fluorosilicate in the reaction system is decreased. Also increasing the reaction temperature tends to increase the rate of silicon substitution. Whether it is necessary or desirable to buffer the reaction system or strictly limit the fluorosilicate concentration is readily determined for each zeolite species by routine observation.

Theoretically, there is no lower limit for the concentration of fluorosilicate salt in the aqueous solution employed, provided of course the pH of the solution is high enough to avoid undue destructive acidic attack on the zeolite structure apart from the intended reaction with the fluorosilicate. Very slow rates of addition of fluorosilicate salts insure that adequate time is permitted for the insertion of silicon as a framework substitute for extracted aluminum before excessive aluminum extraction occurs with consequent collapse of the crystal structure. Practical commercial considerations, however, require that the reaction proceed as rapidly as possible, and accordingly the conditions of reaction temperature and reagent concentrations should be optimized with respect to each zeolite starting material. In general the more highly siliceous the zeolite, the higher the permissible reaction temperature and the lower the suitable pH conditions. In general the preferred reaction temperature is within the range of 50 to 95°C., but temperatures as high as 125°C and as low as 20°C have been suitably employed in some instances. At pH values below about 3 crystal degradation is generally found to be unduly severe, whereas at pH values higher than 7, silicon insertion is unduly slow. The maximum concentration of fluorosilicate salt in the aqueous solution employed is, of course, interdependent with the temperature and pH factors and also with the time of contact between the zeolite and the solution and the relative proportions of zeolite and fluorosilicate. Accordingly it is possible that solutions having fluorosilicate concentrations of from about $10^{-3}$ moles per liter of solution up to saturation can be employed, but it is preferred that concentrations in the range of 0.5 to 1.0 moles per liter of solution be used. These concentration values are with respect to true solutions, and are not intended to apply to the total fluorosilicate in slurries of salts in water. As illustrated hereinafter, even very slightly soluble fluorosilicates can be slurried in water and used as a reagent—the undissolved solids being readily available to replace dissolved molecular species consumed in reaction with the zeolite. As stated hereinabove, the amount of dissolved fluorosilicates employed with respect to the particular

zeolite being treated will depend to some extent upon the physical and chemical properties of the individual zeolites as well as other specifications herein contained in this application. However, the minimum value for the amount of fluorosilicate to be added should be at least equivalent to the minimum mole fraction of aluminum to be removed from the zeolite.

In this disclosure, including the appended claims, in specifying proportions of zeolite starting material or adsorption properties of the zeolite product, and the like, the anhydrous state of the zeolite will be intended unless otherwise stated. The anhydrous state is considered to be that obtained by heating the zeolite in dry air at 100°C for about 1 to 2 hours.

It is apparent from the foregoing that, with respect to reaction conditions, it is desirable that the integrity of the zeolite crystal structure is substantially maintained throughout the process, and that in addition to having extraneous (non-zeolitic) silicon atoms inserted into the lattice, the zeolite retains at least 80 and preferably at least 90 percent of its original crystallinity. A convenient technique for assessing the crystallinity of the products relative to the crystallinity of the starting material is the comparison of the relative intensities of the d-spacings of their respective X-ray powder diffraction patterns. The sum of the peak heights, in terms of arbitrary units above background, of the starting material is used as the standard and is compared with the corresponding peak heights of the products. When, for example, the numerical sum of the peak heights of the product is 85 percent of the value of the sum of the peak heights of the starting zeolite, then 85 percent of the crystallinity has been retained. In practice it is common to utilize only a portion of the d-spacing peaks for this purpose, as for example, five of the six strongest d-spacings. In zeolite Y these d-spacings correspond to the Miller Indices 331, 440, 533, 642 and 555. Other indicia of the crystallinity retained by the zeolite product are the degree of retention of surface area and the degree of retention of the adsorption capacity. Surface areas can be determined by the well-known Brunauer-Emmett-Teller method (B-E-T). J. Am. Chem. Soc. *60* 309 (1938) using nitrogen as the adsorbate. In determining the adsorption capacity, the capacity for oxygen at −183°C at 13332 Pa (100 Torr) is preferred.

All available evidence, to date, indicates that the above described process is unique in being able to produce zeolites essentially free of defect structure yet having molar $SiO_2/Al_2O_3$ ratios higher than those heretofore obtained by direct hydrothermal synthesis i.e., no other process is known to date for preparing LZ-210. The products resulting from the operation of the process share the common characteristic of having a higher molar $SiO_2/Al_2O_3$ ratio than previously obtained for each species by direct hydrothermal synthesis by virtue of containing silicon from an extraneous, i.e. non-zeolitic, source, preferably in conjunction with a crystal structure which is characterized as containing a low level of tetrahedral defect sites. This defect structure, if present, is revealed by the infrared spectrum of zeolites in the hydroxyl-stretching region.

In untreated, i.e. naturally occurring or as-synthesized zeolites the original tetrahedral structure is conventionally represented as

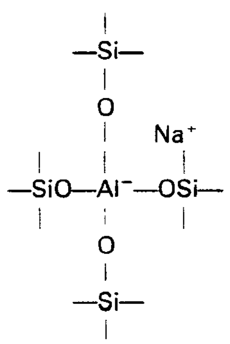

After treatment with a complexing agent such as ethylene-diaminetetraacetic acid ($H_4EDTA$) in which a stoichiometric reaction occurs whereby framework aluminum atoms along with an associated cation such as sodium is removed as NaAlEDTA, it is postulated that the tetrahedral aluminum is replaced by four protons which form a hydroxyl "nest", as follows:

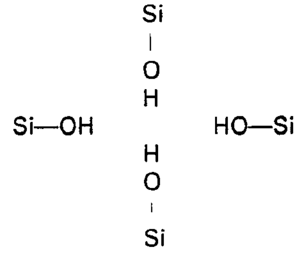

The infrared spectrum of the aluminum depleted zeolite will show a broad nondescript adsorption band beginning at about 3750 $cm^{-1}$ and extending to about 3000 $cm^{-1}$. The size of this absorption band or

envelope increases with increasing aluminum depletion of the zeolite. The reason that the absorption band is so broad and without any specific absorption frequency is that the hydroxyl groups in the vacant sites in the framework are coordinated in such a way that they interact with each other (hydrogen bonding). The hydroxyl groups of adsorbed water molecules are also hydrogen-bonded and produce a similar broad absorption band as do the "nest" hydroxyls. Also, certain other zeolitic hydroxyl groups, exhibiting specific characteristic absorption frequencies within the range of interest, will if present, cause infrared absorption bands in these regions which are superimposed on the band attributable to the "nest" hydroxyl groups. These specific hydroxyls are created by the decomposition of ammonium cations or organic cations present in the zeolite.

It is, however, possible to treat zeolites, prior to subjecting them to infrared analysis, to avoid the presence of the interferring hydroxyl groups and thus be able to observe the absorption attributable to the "nest" hydroxyls only. The hydroxyls belonging to adsorbed water were avoided by subjecting the hydrated zeolite sample to vacuum activation at a moderate temperature of about 200°C for about 1 hour. This treatment permits desorption and removal of the adsorbed water. Complete removal of adsorbed water can be ascertained by noting when the infrared absorption band at about 1640 $cm^{-1}$, the bending frequency of water molecules, has been removed from the spectrum.

The decomposable ammonium cations can be removed, at least in large part, by ion-exchange and replaced with metal cations, preferably by subjecting the ammonium form of the zeolite to a mild ion exchange treatment with an aqueous NaCl solution. The OH absorption bands produced by the thermal decomposition of ammonium cations are thereby avoided. Accordingly the absorption band over the range of 3745 $cm^{-1}$ to about 3000 $cm^{-1}$ for a zeolite so treated is almost entirely attributable to hydroxyl groups associated with defect structure and the absolute absorbance of this band can be a measure of the degree of aluminum depletion.

It is found, however, that the ion-exchange treatment, which must necessarily be exhaustive even though mild, required considerable time. Also the combination of the ion-exchange and the vacuum calcination to remove adsorbed water does not remove every possible hydroxyl other than defect hydroxyls which can exhibit absorption in the 3745 $cm^{-1}$ to 3000 $cm^{-1}$ range. For instance, a rather sharp band at 3745 $cm^{-1}$ has been attributed to the Si—OH groups situated in the terminal lattice positions of the zeolite crystals and to amorphous (non-zeolitic) silica from which physically adsorbed water has been removed. For these reasons we prefer to use a somewhat different criterion to measure the degree of defect structure in the zeolite products of this invention.

In the absence of hydrogen-bonded hydroxyl groups contributed by physically adsorbed water, the absorption frequency least affected by absorption due to hydroxyl groups other than those associated with framework vacancies or defect sites is at 3710±5 $cm^{-1}$. Thus the relative number of defect sites remaining in a zeolite product of this invention can be gauged by first removing any adsorbed water from the zeolite, determining the value of the absolute absorbance in its infrared spectrum at a frequency of 3710 $cm^{-1}$, and comparing that value with the corresponding value obtained from the spectrum of a zeolite having a known quantity of defect structure. The following specific procedure has been arbitrarily selected and used to measure the amount of defect structure in the products prepared in the Examples appearing hereinafter. Using the data obtained from this procedure it is possible, using simple mathematical calculation, to obtain a single and reproducible value hereinafter referred to as the "Defect Structure Factor", denoted hereinafter by the symbol "z", which can be used in comparing and distinguishing the present novel zeolite compositions from their less-siliceous prior known counter-parts and also with equally siliceous prior known counter-parts prepared by other techniques.

Defect structure factor

(A) Defect structure zeolite standard.

Standards with known amounts of defect structure can be prepared by treating a crystalline zeolite of the same species as the product sample with ethylenediaminetetraacetic acid by the standard procedure of Kerr as described in U.S. Patent 3,442,795. In order to prepare the standard it is important that the starting zeolite be well crystallized, substantially pure and free from defect structure. The first two of these properties are readily determined by conventional X-ray analysis and the third by infrared analysis using the procedure set forth in part (B) hereof. The product of the aluminum extraction should also be well crystallized and substantially free from impurities. The amount of aluminum depletion, i.e., the mole fraction of tetrahedral defect structure of the standard samples can be ascertained by conventional chemical analytical procedure. The molar $SiO_2/Al_2O_3$ ratio of the starting zeolite used to prepare the standard sample in any given case is not narrowly critical, but is preferably within about 10% of the molar $SiO_2/Al_2O_3$ ratio of the same zeolite species used as the starting material in the practice of the process of the present invention.

(B) Infrared spectrum of product samples and defect structure zeolite standard.

Fifteen milligrams of the hydrated zeolite to be analyzed are pressed into a 13 mm. diameter self-supporting wafer in a KBr die under 2268 kg (5000 lbs.) pressure. The wafer is then heated at 200°C for 1 hour at a pressure of not greater than 0.013 Pa ($1\times10^{-4}$ mm. Hg) to remove all observable traces of physically adsorbed water from the zeolite. This condition of the zeolite is evidenced by the total absence of

an infrared adsorption band at 1640 $cm^{-1}$. Thereafter, and without contact with adsorbable substances, particularly water vapor, the infrared spectrum of the wafer is obtained on an interferometer system at 4 $cm^{-1}$ resolution over the frequency range of 3745 to 3000 $cm^{-1}$. Both the product sample and the standard sample are analyzed using the same interferometer system to avoid discrepancies in the analysis due to different apparatus. The spectrum, normally obtained in the transmission mode of operation is mathematically converted to and plotted as wave number vs. absorbance.

(C) Determination of the defect structure factor.

The defect structure factor (z) is calculated by substituting the appropriate data into the following formula:

$$z=\frac{AA_{(ps)}\times(\text{Mole fraction of defects in the standard})}{AA_{(std)}}$$

wherein $AA_{(ps)}$ is the infrared absolute absorbance measured above the estimated background of the product sample at 3710 $cm^{-1}$; $AA_{(std)}$ is the absolute absorbance measured above the background of the standard at 3710 $cm^{-1}$ and the mole fraction of defects in the standard are determined in accordance with part (A) above.

Once the defect structure factor, z, is known, it is possible to determine from wet chemical analysis of the product sample for $SiO_2$, $Al_2O_3$ and the cation content as $M_{2/n}O$ whether silicon has been substituted for aluminum in the zeolite as a result of the treatment and also the efficiency of any such silicon substitution.

The fact that the present process results in zeolite products having silicon substituted for aluminum in the framework is substantiated by the framework infrared spectrum in addition to the hydroxyl region infrared spectrum. In the former, there is a shift to higher wave numbers of the indicative peaks and some sharpening thereof in the case of the present products, as compared to the starting zeolite, which is due to an increased $SiO_2/Al_2O_3$ molar ratio.

The essential X-ray powder diffraction patterns appearing in this specification and referred to in the appended claims are obtained using standard X-ray powder diffraction techniques. The radiation source is a high-intensity, copper target, X-ray tube operated at 50 Kv and 40 ma. the diffraction pattern from the copper K alpha radiation and graphite monochromator is suitably recorded by an X-ray spectrometer scintillation counter, pulse-height analyzer and strip-chart recorder. Flat compressed powder samples are scanned at 2° (2 theta) per minute, using a 2 second time constant. Interplanar spacings (d) are obtained from the position of the diffraction peaks expressed as 2 theta, where 2 theta is the Bragg angle as observed on the strip chart. Intensities are determined from the heights of diffraction peaks after subtracting background.

In determining the cation equivalency, i.e. the molar ratio $M_{2/n}O/Al_2O_3$ in each zeolite product, it is advantageous to perform the routine chemical analysis on a form of the zeolite in which "M" is a monovalent cation other than hydrogen. This avoids the uncertainty which can arise in the case of divalent or polyvalent metal zeolite cations as to whether the full valence of the cation is employed in balancing the net negative charge associated with each $AlO_4^-$ tetrahedron or whether some of the positive valence of the cation is used in bonding with $OH^-$ or $H_3O^+$ ions.

The preferred novel crystalline aluminosilicate compositions of the present invention will contain a chemical or molar framework composition which can be determined from the expression of mole fractions of framework tetrahedra previously described:

$$[Al_{(a-N)}Si_{b+(N-\Delta z)}\square_z]O_2$$

wherein: the framework Si/Al ratio is determined by

$$\frac{b+(N-\Delta z)}{a-n}$$

and is numerically greater than 3, the mole fraction of silicon tetrahedra substituted into the framework of the product zeolite $(N-\Delta z)$ is increased by at least a value for

$$\frac{(N-\Delta z)}{N}$$

which is numerically equal to or greater than 0.5, the change in Defect Structure Factor $\Delta z$ is increased by less than 0.08 and preferably less than 0.05.

Moreover, regardless of the Defect Structure Factor of any zeolite material which has been treated according to the present process, it is novel by virtue of having had extraneous silicon inserted into its

crystal lattice and having a molar $SiO_2/Al_2O_3$ ratio greater than heretofore obtained by direct hydrothermal synthesis. This is necessarily the case sine all other methods for increasing the $SiO_2/Al_2O_3$ ratio of a zeolite crystal must remove framework aluminum atoms, and unless at least one of those removed aluminum atoms is replaced by a silicon atom from a source other than the crystal itself, the absolute defect structure content of the crystal must be greater than that of LZ-210.

Catalysts LZ-210-T and LZ-210-M

The catalysts of the instant invention are prepared by the treatment of LZ-210 having a $SiO_2$ to $Al_2O_3$ ratio of greater than 6.0, and, depending on the exact nature of the catalytic cracking process, e.g. cracking of resids, preferably greater than 8.0. For a conventional cracking process the preferred $SiO_2$ to $Al_2O_3$ range is greater than 6.0 and less than 8.0 and is correlated to the catalyst regeneration step to effect a process with improved catalyst activity and gasoline yield.

The term "thermal treatment" is employed here to denominate both a thermal calcination and a hydrothermal calcination (thermal calcination in the presence of steam). The thermal treatment is carried out at an effective temperature and time and when a hydrothermal treatment in the presence of an effective amount of steam, to provide an LZ-210 derived catalyst of the instant invention, referred to herein as LZ-210-T. The thermal treatment is typically carried out at a temperature in excess of 300°C for a period in excess of 0.1 hour, preferably between 0.1 hour and about 10 hours and when the thermal treatment is a hydrothermal treatment it is typically carried out in the presence of at least about 20 percent steam by volume in air. The source of the steam is not important and may be provided from an external source or may be generated *in situ* at the temperatures employed for the hydrothermal treatment.

LZ-210-M is prepared by ion-exchange or impregnation of LZ-210, which, optionally, has been subjected to thermal treatment, by contacting the LZ-210 with a solution of at least one multi-valent cation selected from the group consisting of cations of Group IIA, and rare earth cations selected from the group consisting of cerium, lanthanum, praseodymium, neodymium, promethium, samarium, europium, gadolinium, terbium, dysprosium, holmium, erbium, thulium, ytterbium, lutetium and mixtures thereof. As a result of ion-exchange of the LZ-210 (or LZ-210-M), at least one multivalent cation, e.g., rare earth cation, is ion-exchanged with the cations initially present in LZ-210. The multivalent cation is preferably present in an effective amount that removes at least about 2 ion exchange percent of the cations present in the starting LZ-210 material and is typically present in an effective amount greater than about 5.0 ion exchange percent and preferably between about 16 ion exchange percent and about 80 ion exchange percent.

The catalysts referred to herein are prepared from LZ-210 materials having silica to alumina ratio of greater than 6 and, depending on the cracking process greater than 8.0. For example, when the hydrocarbon feedstock to be cracked is a resid or a feed stock containing at least 10 weight percent resid, the silica to alumina ratio is preferably above 8.0 when the regenerator is operated at higher temperatures to facilitate the burn-off of the increased amount of coke formed by the presence of the resid. For a convention cracking process employing a hydrocarbon feed boiling between 215°C (420°F) and 593°C (1100°F) the regenerator conditions are such that it is preferred to use an LZ-210-T or LZ-210-M having a $SiO_2/Al_2O_3$ ratio greater than 6.0 and less than 8.0 by correlating the $SiO_2/Al_2O_3$ ratio to the processing and/or catalyst regeneration conditions. The preparation of LZ-210-T and LZ-210-M can involve several steps including multi-valent cation exchange, thermal and/or hydrothermal treatment and other optional treatments such as ammonium ion exchange. The various processing steps employed to prepare a given catalyst are denominated herein by a shorthand notation where the following notations have the following general meanings:

i)=thermal treatment at effective conditions; and
ii)=LZ-210 has been exchanged with a multivalent cation; and optionally, the LZ-210 can be ion exchanged with ammonium cations.

The above process steps can be employed in a sequential manner to set forth the processing sequences employed for a given catalyst and may be employed in any order for one or more times. For example, the designation "i), ii)" means that the LZ-210 material has been sequentially thermally treated and then ion exchanged with at least one multivalent cation.

The process for the preparation of LZ-210-T and LZ-210-M generally comprises treatment of a zeolite aluminosilicate which has a mole ratio of oxides in the dehydrated state of

$$(0.85-1.1)M_{2/n}O:Al_2O_3:x\ SiO_2$$

wherein M is a cation having a valence of "n"; "x" has a value greater than 6.0, has an X-ray powder diffraction pattern having at least the d-spacings of Table A and having extraneous silicon atoms in the crystal lattice in the form of framework $SiO_4$ tetrahedra by employing at one of the following steps of:

(i) treating the aluminosilicate at an effective temperature for an effective time; and
(ii) providing an effective amount of at least one metal rare-earth cation selected from the class consisting of cerium, lanthanum, praseodymium, neodymium, promethium, samarium, europium,

gadolinium, terbium, dysprosium, holmium, erbium, thulium, ytterbium, lutetium and mixtures thereof.

It is understood that in addition to steps (i) and (ii) that combinations of steps (i) and (ii) for one or more times in any order are within the scope of this invention.

In addition to the above, the aluminosilicate may be ammonium exchanged either before or after either of steps (i) or (ii). The ion exchange step(s) (either ammonium or multivalent cation) is generally carried out by preparing a slurry of LZ-210 or LZ-210-T zeolite by adding about 5 to 15 volumes of water per volume of catalyst, after which a solution of a rare earth salt is added. The ion exchange is generally carried out at room temperature and the resulting solution is then heated to above about 50°C and stirred at this temperature for about 0.5 to 3 hours. This mixture is then filtered and water washed to remove excess anion present as a result of the solution of the ammonium or multivalent cation salt.

The ammonium ion exchange step is preferably carried out by slurrying zeolite LZ-210 with between 5 to 15 volumes of water per volume of catalyst after which an ammonium salt is added to the slurry. The resulting mixture is typically heated to a temperature above about 50°C for a period between about 0.5 to 3 hours. The mixture is filtered and water washed until excess anion from the ammonium salt is removed. The ammonium ion exchange process is typically repeated one or more times according to the above described procedure.

Catalysts LZ-210-T and LZ-210-M are typically employed with an inorganic oxide matrix which may be inorganic matrices which are typically employed in any of the formulating FCC catalysts including: amorphous catalytic inorganic oxides, clays such as silica, alumina, silica-alumina, silica-zirconia, silica-magnesia, alumina-boria, alumina-titania and the like and mixtures thereof. The matrix may be in the form of a sol, hydrogel or gel and is typically an alumina or silica-alumina component such as a conventional silica-alumina cracking catalyst, several types and compositions of which are commercially available. The matrix may itself provide a catalytic effect or it may be essentially inert. The matrix may act as a "binder" in some instances although in some instances the final catalyst will be spray dried or formed without the need of a binder. These materials may be prepared as a cogel of silica and alumina or as alumina precipitated on a preformed and preaged hydrogel. The silica may be present as a major component in the solids present in said gels, e.g. present in an amount between about 55 and about 99 weight percent and preferably between about 70 and about 90 weight percent. The silica may also be employed in the form of a cogel comprising about 75 weight percent silica and about 25 weight percent alumina or comprising about 87 weight percent silica and about 13 weight percent alumina. The inorganic oxide matrix component will typically be present in the catalyst in an amount between about 20 and about 99 weight percent, preferably between about 50 and about 90 weight percent, based on the total catalyst. It is also within the scope of the instant invention to employ other materials with the LZ-210-T and LZ-210-M in the final cracking catalysts, including various other types of zeolites, clays, carbon monoxide oxidation promoters, etc.

As above mentioned, the catalysts of the present invention may be employed with a matrix component and this may be an alumina component. The alumina component which may comprise discrete particles of various aluminas, preferably crystalline aluminas. The alumina component may be in the form of discrete particles having a total surface area, as measured by the method of Brunauer, Emmet and Teller (BET), greater than about 20 square meters per gram ($M^2/g$), preferably greater than 145 $M^2/g$, for example, from about 145 to about 300 $M^2/g$. The pore volume (BET) of the alumina component is typically be greater than 0.35 cc/g. The average particle size of the alumina particles is generally less than 10 microns and preferably less than 3 microns. The alumina may be employed alone as the matrix or composited with the other matrix components having inherently less catalytic cracking activity than the alumina matrix component. The alumina component may be any alumina and has preferably been preformed and placed in a physical form such that its surface area and pore structure are stabilized so that when the alumina is added to an impure, inorganic gel containing considerable amounts of residual soluble salts, the salts will not alter the surface and pore characteristics measurably nor will they promote chemical attack on the preformed porous alumina which could undergo change. For example, the alumina is typically an alumina which has been formed by suitable chemical reaction, the slurry aged, filtered, dried, washed free of residual salt and then heated to reduce its volatile content to less than about 15 weight percent. The alumina component may be present in the final catalyst in an amount ranging between about 5 and about 95 weight percent, preferably between about 10 and about 30 weight percent based on the total catalyst. Further, an alumina hydrosol or hydrogel or hydrous alumina slurry may be used in the catalyst preparation.

Mixtures of LZ-210-T and/or LZ-210-M and an inorganic matrix are typically formed into a final form for the catalyst by standard catalyst forming techniques including spray-drying, pelleting, extrusion and other suitable conventional means. For example, one inch extruded pellets may be dried in air (110°C) and then, further dried in an air purge at a programmed temperature increase from room temperature to about 220°C over a 1.5 hour period, held at 220°C for about 1.5 hour and then heated to 480°C over a period of 1.5 hour and held at 480°C for 1.5 hour.

Catalytic cracking catalysts may be prepared by any one of several conventional methods. One method of preparing such catalysts employing silica-alumina and porous alumina is to react sodium silicate with a solution of aluminum sulfate to form a silica/alumina hydrogel slurry which is then aged to give the desired

pore properties, filtered to remove a considerable amount of the extraneous and undesired sodium and sulfate ions and then reslurried in water. The alumina may be prepared by reacting solutions of sodium aluminate and aluminum sulfate under suitable conditions, aging the slurry to give the desired pore properties of the alumina, filtering drying, reslurry in water to remove sodium and sulfate ions and drying to reduce volatile matter content to less than 15 weight percent. The alumina may then be slurried in water and blended in proper amounts, with a slurry of impure silica-alumina hydrogel. The LZ-210-T and/or LZ-210-M component may then be added to this blend. A sufficient amount of each component is utilized to give the desired final composition. The resulting mixture is then filtered to remove a portion of the remaining extraneous soluble salts therefrom. The filtered mixture is then dried to produce dried solids. The dried solids are subsequently reslurried in water and washed substantially free of the undesired soluble salts. The catalyst is then dried to a residual water content of less than about 15 weight percent. The catalyst is typically recovered after calcination.

Catalytic cracking with the catalyst of the present invention can be conducted in any conventional catalytic cracking manner. Suitable catalytic cracking conditions include a temperature ranging from about 371°C (700°F). to about 704°C (1300°F.) and a pressure ranging from about subatmospheric to several atmospheres, typically from about atmospheric to a gauge pressure of about 7 bar (100 psig). The process may be carried out in a fixed bed, moving bed, ebullating bed, slurry, transferline, riser reactor or fluidized bed operation. The catalyst of the present invention can be used to convert any of the conventional hydrocarbon feeds used in catalytic cracking, that is, it can be used to crack naphthas, gas oil and residual oils having a high content of metal contaminants. It is especially suited for cracking hydrocarbons boiling in the gas oil range, that is, hydrocarbon oils having an atmospheric pressure boiling point ranging from about 215°C (420°F) to about 593°C (1100°F). to naphthas to yield not only products having a lower boiling point than the initial feed but also products having an improved octane number.

In addition, the instant catalyst can be effectively used in an FCC (fluid catalytic cracking) process wherein a carbon-hydrogen fragmentation compound (CHFC) employed in admixture with the crude oil feed. Such a process will be referred to herein as an FCC-CHFC process.

The term "carbon-hydrogen fermentation compound(s)" is employed herein to mean materials comprising a lesser number of carbon atoms than found in materials within the gasoline boiling range, preferably those materials containing 5 or less carbon atoms, that fit into any of the categories of:

a) Hydrogen-rich molecules, i.e. molecules with wt.% hydrogen ranging from about 13.0—25.0 wt.%. This may include light paraffins, i.e. $CH_4$, $C_2H_6$, $C_3H_8$ and other materials.

b) i.e. a molecule whose chemical structure permits or favors the transfer of carbon-hydrogen fragments. This includes $CH_3OH$, other low boiling alcohols such as ethanol, n-propanol, isopropanol, n-butanol, isobutanol, etc., aliphatic ethers, e.g., dimethyl ether, and other oxygen compounds (acetals, aldehydes, ketones).

c) Secondary Reaction Products from materials in categories (a) or (b) above that are carbon-hydrogen fragmentation compounds themselves, or transfer hydrogen. This includes olefins, napthenes, or paraffins.

d) Classes of materials which are structurally or chemically equivalent to those of category (c), noteably olefins, etc.; and

e) A combination of any or all of the materials in categories (a) through (d). The preferred carbon-hydrogen fragmentation compounds are methanol, dimethyl ether and $C_2$—$C_5$ olefins, with methanol and dimethyl ether being the most preferred.

The terms "crude oil feed" is used herein for the FCC-CHFC process and otherwise to denominate any full range crude oil from primary, secondary or tertiary recovery from conventional or offshore oil fields. "Crude oil feeds" may include any full range "syncrude" such as those that can be derived from coal, shale oil, tar sands and bitumens. The crude may be virgin (straight run) or generated synthetically by blending. It is generally desirable, however, to first desalt the crude since sodium chloride is known to be a poison for most cracking operations. Further the term crude oil derived feed is meant to include component parts of the crude which are generally employed as catalytic cracking feeds or potential feeds therefor and include: feeds such as distillate gas oils, heavy vacuum gas oils, atmospheric and vacuum resids, syncrudes (from shale oil, tar sands, coal), feed derived from hydrocrackers, hydrotreaters, cokers, pyrolysis processes and high boiling FCC product recycle fractions; and fractions boiling above the traditional end of the gasoline boiling range which generally includes compounds containing greater than about eleven carbon atoms and combinations thereof.

Further, the FCC-CHFC process is believed to involve combination reactions which are believed to be effective, at least in part, in removing sulfur, oxygen, nitrogen and metal contaminants found in a whole crude or a heavy hydrocarbon portion thereof.

The operation of the FCC-CHFC type process is generally carried out at temperature within the range of 204°C (400°F.) up to about 760°C (1400°F.) and more usually within the range of 371°C (700°F.) to about 649°C (1200°F.) at pressures selected from within the range of below atmospheric up to several hundred pounds per square inch gauge (psig) but normally less than 7 bar (100 psig). Preferred conditions include a temperature within the range of about 427°C (800°F.) to about 621°C (1150°F.) and pressures within the range of atmospheric to about 14 bar (200 psig) and higher.

The carbon-hydrogen fragmentation compound may be provided to the process in most any way so long as it is present when contact with the catalyst material is effected, i.e. *in situ* generation is suitable.

In the preferred operation an FCC-CHFC process methanol is used in combination with a gas oil type of hydrocarbon charge stock. The weight percent of methanol in the hydrocarbon charge passed to the cracking or conversion operation will vary considerably and may be selected from within the range of between about 1% and about 25 percent by weight, it being preferred to maintain the ratio within the range between about 5% and about 20, based on the weight of the feed. However, this may vary depending upon the hydrogen deficiency of the high molecular weight hydrocarbon charge, the amount of sulfur, nitrogen and oxygen in the oil charge, the amount of polycyclic aromatics, the type of catalyst employed, and the level of conversion desired. It is preferred to avoid providing any considerable or significant excess of methanol with the charge because of its tendency to react with itself under some conditions.

The FCC-CHFC process preferably employs a fluidized catalyst system at low pressures without the need for high pressure hydrogen gas. Such a system promotes the highly efficient contact of relatively inexpensive carbon-hydrogen fragmentation compounds with heavy, refractory molecules in the presence of high-surface area cracking catalyst. Intermolecular hydrogen-transfer interactions, e.g., methylating reactions, and catalytic cracking reactions are effected in the presence of fluidized catalyst particles and act to minimize problems due to diffusion/mass transport limitations and/or heat transfer.

The FCC-CHFC process can make use of the relatively cheap carbon-hydrogen fragmentation compounds readily available in petroleum refineries, such as light gas fractions, light olefins, low boiling liquid streams, etc., and, in particular, can employ methanol, a product which is readily available in quantity, either as a transportable product from overseas natural gas conversion processes, or as a product from large scale coal, shale, or tar sand gasification. It also can utilize carbon monoxide (in combination with contributors such as water or methanol), which gas is readily available from refinery regeneration flue gas (or other incomplete combustion processes), or from coal, shale, or tar sand gasification. Highly efficient recycle of carbon-hydrogen fragmentation compounds can also be effected.

The following examples were carried out to illustrate the instant invention and are not intended to be limiting thereof.

Examples 1 to 4

Examples 1 to 4 are examples employing Reference Zeolites: Y, RE-Y LZ-210 and a zeolite of this invention, respectively LZ-210-RE. Reference Zeolite Y is a commercially available Y catalyst having a $SiO_2$ to $Al_2O_3$ ratio of 5.0 and is the zeolite in Example 1. The prefix or suffix "RE" is employed herein to denominate ion exchange of a zeolite with at least one rare earth cation. The rare earth exchanged forms are the zeolite employed in Examples 2 and 4. LZ-210 was prepared according to the procedure of U.S. Pat. No. 4,503,023 from a Y zeolite having an $SiO_2/Al_2O_3$ ratio of about 5.0 to give an LZ-210 product having an $SiO_2/Al_2O_3$ ratio of about 6.5. Zeolites RE-Y and LZ-210-RE were prepared by ion exchange, with a commercially available rare earth chloride solution from Molycorp, Inc. and sold under Product Code No. 5240. The rare earth analysis of Code No. 5240 is:

| | wt. % |
|---|---|
| Ce | 2.8 |
| La | 14.7 |
| Nd | 4.5 |
| Pr | 3.3 |

The rare earth ion exchange was carried out by preparing a slurry of about 200 grams of anhydrous LZ-210 in one liter of water and about 50 grams of the rare earth chloride solution. Analysis indicated that the rare earth content was about 5 to 6 percent by weight based on the oxide of the total weight. The slurry was refluxed for one hour, filtered and washed with water until essentially free of residual chloride. The resulting product was then dried.

The catalysts of Examples 1 to 4 were prepared by employing zeolites, Y, RE-Y, LZ-210 and LZ-210-RE and formulating each into a final catalyst by forming zeolite and alumina composites consisting of 15% by weight zeolite and 85% by weight alumina, based on the anhydrous total weight. The composites were formed by mixing the zeolite with about 76% of the alumina component in a Hobart mixer and then adding thereto the remaining alumina in a petized form. The composite was then extruded to 1/16 inch extrudates, dried at 100°C and then calcined in dry air to 500°C. The extrudates were then sized (10—12 standard U.S. mesh) and hydrated. The finished catalysts were then heated in a furnace in static air to 750°C at the rate of 12—16°C per minute. The extrudates were then contacted with 100% steam a 750°C for five hours and then cooled to 200°C. The extrudates were then collected and sized to 60—100 mesh (U.S. Standard) and tested as cracking catalysts.

The catalysts were then evaluated by ASTM D-3907 for use as cracking catalysts.

Example 4 shows that a catalyst prepared from a rare earth exchanged LZ-210 (LZ-210-RE) had a higher % conversion and higher % gasoline than the zeolites of Examples 1 and 2 which were derived from zeolite

Y and, similarly, had a high % conversion and higher % gasoline than the LZ-210 of Example 3. The higher % Coke for Example 4 indicates that the catalysts prepared from the zeolites of the present invention are more active than the catalysts prepared by the use of the zeolites of Examples 1, 2 and 3.

TABLE I

| Example[2] | % Conv.[1, 3] | % Gasoline[4] | % Gas[4] | % Coke[4] |
|---|---|---|---|---|
| 1 | 68.6 | 51.0 | 12.6 | 5.2 |
| 2 | 70.9 | 50.9 | 14.9 | 5.1 |
| 3 | 69.8 | 51.5 | 13.6 | 4.9 |
| 4 | 73.2 | 53.7 | 13.7 | 5.9 |

[1] evaluated by ASTM D-3907
[2] Examples 1, 2, 3 and 4 are the average value of triplicate determinations
[3] percent conversion by weight, based on converted feed
[4] wt. % Gasoline=$C_5$ hydrocarbons to hydrocarbons boiling below 216°C (420°F) in product as weight percent of feed.
wt. % Gas=hydrocarbons boiling below $C_5$ in product as weight percent of feed.
wt. % Coke=residue left on used catalyst after stripping as set forth in ASTM D-3907 as weight percent of feed.

Examples 5 to 12

Examples 5 to 12 were carried out to compare LZ-210 and LZ-210-M wherein M is a rare earth cation. Examples 5, 8 and 11 are comparative Examples wherein no rare earth exchange was carried out. Examples 6, 7, 9, 10 and 12 include a rare earth exchange carried out as in Examples 2 and 4 with the weight percent rare earth oxide based on the total final weight of the rare earth exchanged zeolite being, respectively, 5.77%, 6.19%, 6.15%, 2.27% and 5.8%. Each LZ-210 was prepared from a Y zeolite having a $SiO_2$ to $Al_2O_3$ ratio of about 5.

Each zeolite was formed into a catalyst comprising the zeolite and alumina, extruded and dried to 500°C, as in Examples 1 to 4. The extrudates were hydrated and then heated in static air to 750°C at the rate of 12 to 16°C per minute. The extrudates were then contacted with an air/steam stream containing 23 percent by volume steam and heated to 840°C and held at this temperature for 17 hours. The initial heating procedure and *in situ* generated steam and the heating procedure at 840°C are simulations of the conditions experienced by a cracking catalyst in the stripper and regenerator portions of a commercial cracking unit. The above procedure employed for the instant catalysts and those in the following Examples was a deactivation by a hydrothermal treatment to simulate a catalyst which has been employed in catalytic cracking. A deactivation procedure has been recommended by ASTM committee D-32 (subcommittee D-32.04 on Catalytic Properties) on Catalysts entitled "Proposed Standard for Steam Deactivated of Fresh Cracking Catalysts", 4th Draft, Amsterdam, July 6, 1982, incorporated herein by reference thereto. The catalysts were then sized to 60/100 mesh (U.S. Standard) and tested by ASTM D-3907. The results of these tests are shown in Table II. Table II shows that improved yield to gasoline is obtained with LZ-210-RE as compared to LZ-210 having a similar $SiO_2/Al_2O_3$ ratio.

TABLE II

| Example | 5 | 6 | 7 | 8 | 9 | 10 | 11 | 12 |
|---|---|---|---|---|---|---|---|---|
| $SiO_2/Al_2O_3$ | 7.4 | 7.4 | 7.9 | 9.1 | 9.1 | 9.1 | 11.0 | 11.0 |
| % Conversion[1] | 72.5 | 71.0 | 71.2 | 73.9 | 71.5 | 71.3 | 71.3 | 71.6 |
| % Gasoline[1] | 48.3 | 52.6 | 49.6 | 48.5 | 49.7 | 48.3 | 48.3 | 49.6 |

[1] % Conversion and % Gasoline are as defined in Table I.

Examples 13 to 16

Four zeolites were compared in Examples 13, 14, 15 and 16. The zeolite of Example 13 was a Y zeolite having a $SiO_2/Al_2O_3$ ratio of about 5.0. Examples 14, 15 and 16 employ LZ-210 compositions prepared from a Y zeolite having a $SiO_2/Al_2O_3$ ratio of about 5.0 and, respectively have $SiO_2/Al_2O_3$ ratios of 6.5, 7.0 and 9.0. Each zeolite was rare earth exchanged, as before described, to give a rare earth content (based on rare earth oxide on total anhydrous weight of exchanged zeolite), respectively, of 13.6%, 8.9%, 10.7% and 9.9%.

Each zeolite was formulated into a catalyst by use of a silica/alumina matrix with the composite containing 15 wt.% zeolite and 85 wt.% matrix. The composite was formed into extrudates as described in

Examples 5 to 12 except the extrudates were deactivated prior to testing as catalysts by heating the extrudates to 200°C in nitrogen (about 5 hours), heating the extrudates from 200°C to 760°C, and then heating at 760°C in 100% steam for 5 hours. The extrudates were cooled and then tested as above described in Examples 5 to 12 by ASTM D-3907. The results of these tests are shown in Table III. The results show that under mild deactivation conditions that an LZ-210 having a $SiO_2/Al_2O_3$ ratio of 6.5 provides superior yield to gasoline. The results in Table V show that this improvement in yield is related to a correlation of the deactivation of the catalyst, i.e., process conditions with the $SiO_2/Al_2O_3$ ratio such that at the more severe deactivation employed in Examples 20 to 22, i.e., more severe process conditions, the $SiO_2/Al_2O_3$ ratio for LZ-210 of about 8.4 showed superior yield to gasoline when compared to the zeolites of Examples 20 and 21, having comparable $SiO_2/Al_2O_3$ ratios.

TABLE III

| Example[1] | 13 | 14 | 15 | 16 |
|---|---|---|---|---|
| $SiO_2/Al_2O_3$ | 5.0 | 6.5 | 7.0 | 9.0 |
| % Conversion | 69.3 | 72.2 | 68.0 | 65.8 |
| % Gasoline | 51.3 | 52.6 | 50.6 | 50.4 |
| % Coke | 3.6 | 3.2 | 3.2 | 1.9 |

[1] Conversion, % Gasoline, % Gas and % Coke are as defined in Table I.

Examples 17 to 19

Examples 17 to 19 were carried out to evaluate the hydrothermal stability of: (1) an acid washed zeolite Y; (2) an EDTA extracted zeolite Y; and (3) LZ-210, respectively. The zeolites were ammonium exchanged to provide zeolites with similar $Na_2O$ contents. Each zeolite was steam deactivated by a procedure similar to that described in Examples 5 to 12 except that instead of incrementally heating the zeolites the zeolites were placed in a hot furnace (873°C±4°C) in the presence of 23%±2% by volume steam in air for five hours. The zeolites were then hydrated at room temperature (18°C to 22°C) for at least 48 hours. The percent oxygen retention, percent surface area retention and percent X-ray retention (XRD) were measured by the procedure described in U.S. Pat. No. 4,503,023 for each zeolite. The oxygen capacity, surface area and crystallinity of the zeolites were measured before and after the hydrothermal treatment and then the oxygen retention, percent surface area retention and percent X-ray retention were determined. A higher over all retention, indicates the zeolite would be expected to be more stable towards the hydrothermal conditions found in catalytic cracking processes, accordingly and have a longer catalyst life. The "Average Retention" values in Table IV are most significant when compared with the cracking data in Table V which shows that LZ-210 gives a % conversion greater than 70 percent while having a high average retention, and, accordingly, improved catalyst life.

TABLE IV

| Example | 17 | 18 | 19 |
|---|---|---|---|
| $SiO_2/Al_2O_3$: | 8.8 | 8.1 | 8.4 |
| % $O_2$ Retention: | 49.2 | 26.0 | 47.9 |
| % Surface Area: Retention | 45.9 | 19.4 | 46.6 |
| % XRD Retention: | 54.2 | 19.3 | 57.9 |
| Average Retention: | 49.8 | 21.6 | 50.8 |

Examples 20 to 22

The initial zeolites described in Examples 17, 18, and 19 were evaluated in Examples 20, 21 and 22, respectively, by ASTM D-3907 by preparing catalysts employing the zeolites by the procedure described in Examples 5 to 12. Table V shows that LZ-210 exhibited a high percentage of the products in the gasoline range at a % conversion of 72.8 percent.

TABLE V

| Example[1] | 20 | 21 | 22 |
|---|---|---|---|
| $SiO_2/Al_2O_3$ | 8.8 | 8.1 | 8.4 |
| % Conversion | 65.9 | 74.4 | 72.8 |
| % Gasoline | 47.9 | 48.4 | 51.9 |
| % Gas | 13.0 | 14.7 | 15.4 |
| % Coke | 5.1 | 4.8 | 5.1 |

[1] % Conversion, % Gasoline, % Gas and % Coke are as defined in Table I.

Example 23

An FCC-CHFC process is carried out using a crude oil feed comprising a heavy vacuum gas oil in a cracking operation. The vacuum gas oil is characterized by the API gravity 315°C (600°F) of 20.7, an average molecular weight of about 400±10 and a boiling range between about 371°C (700°F) and about 593°C (1100°F.) The carbon-hydrogen fragmentation compound is methanol and is present in an amount of 10 percent by weight. The catalyst is LZ-210-M ($SiO_2/Al_2O_3$ of 6.8) and riser FCC unit after heating the catalyst to about 537°C±10°C (1000°F±20°F.) The hydrocarbon products show improved selectivity to motor fuel (hydrocarbon) products by addition of methanol as characterized by the presence of hydrocarbon fuels boiling below the boiling range of the crude oil feed.

**Claims**

1. The cracking catalyst, obtainable by a process comprising the treatment of a zeolite aluminosilicate which has a mole ratio of oxides in the dehydrated state of

$$(0.85-1.1)M_{2/n}O:Al_2O_3:x\ SiO_2$$

wherein M is a cation having a valence of "n"; "x" has a value greater than 6.0, has an X-ray powder diffraction pattern having at least the d-spacings of the following Table A

TABLE A

| $d(10^{-4}\ \mu m)$ | Intensity |
|---|---|
| 14.3 —13.97 | very strong |
| 8.71— 8.55 | medium |
| 7.43— 7.30 | medium |
| 5.66— 5.55 | strong |
| 4.75— 4.66 | medium |
| 4.36— 4.28 | medium |
| 3.75— 3.69 | strong |
| 3.30— 3.23 | strong |
| 2.85— 2.79 | strong |

and has extraneous silicon atoms in the crystal lattice in the form of framework $SiO_4$ tetrahedra, by employing at least one of the following steps of:

(i) treating the aluminosilicate at a temperature of 300°C for a time greater than 0.1 hour, preferably between 0.1 hour and about 10 hours,

(ii) providing an effective amount of at least one multivalent cation selected from the class consisting of Group IIA, cerium, lanthanum, praseodymium, neodymium, promethium, samarium, europium, gadolinium, terbium, dysprosium, holmium, erbium, thulium, ytterbium, lutetium and mixtures thereof;

with the proviso that steps (i) and (ii) can be carried out for one or more times in any order.

2. The cracking catalyst of claim 1, wherein the zeolitic aluminosilicate is defined as having a chemical composition expressed in terms of mole fractions of framework tetrahedra as:

$$[Al_{(a-N)}Si_{b+(N-\Delta z)}\square_z]O_2$$

wherein

$$\frac{b+(N-\Delta z)}{a-N}$$

has a value greater than 6, the change in defect structure factor Δz is less than 0.08; an increased silicon content in the framework,

$$\frac{(N-\Delta z)}{N},$$

of at least 0.5; and a cation equivalent expressed as a monovalent cation species, $M^+/Al$, from 0.85 to 1.1 and the characteristic crystal structure of zeolite Y as indicated by an X-ray powder diffraction pattern having at least the d-spacings set forth broadly in Table A.

3. The cracking catalyst of Claim 1, wherein the aluminosilicate is ammonium exchanged one or more times.

4. A cracking catalyst comprising a zeolitic aluminosilicate which has a mole ratio of oxides in the dehydrated state of

$$(0.85-1.1)M_{2/n}O:Al_2O_3:x\ SiO_2$$

wherein M is a cation having a valence of "n"; "x" has a value greater than 6.0; has an X-ray powder diffraction pattern having at least the d-spacings of Table A of claim 1; has extraneous silicon atoms in the crystal lattice in the form of framework $SiO_4$ tetrahedra; wherein said zeolitic aluminosilicate has between about 5 ion exchange percent and about 80 ion exchange percent of the cations are selected from the group consisting of Group IIA, cerium, lanthanum, praseodymium, neodymium, promethium, samarium, europium, gadolinium, terbium, dysprosium, holmium, erbium, thulium, ytterbium, lutetium and mixtures thereof.

5. The cracking catalyst of claim 4 wherein the value of "x" is greater than 6.0 and less than 8.0.

6. The cracking catalyst of claim 4 wherein the zeolitic aluminosilicate is defined as having a chemical composition expressed in terms of mole fractions of framework tetrahedra as:

$$[Al_{(a-N)}Si_{b+(N-\Delta z)}\square_z]O_2$$

wherein

$$\frac{b+(N-\Delta z)}{a-N}$$

has a value greater than 6.0; the change in defect structure factor Δz is less than 0.08; an increased silicon content in the framework,

$$\frac{(N-\Delta z)}{N},$$

of at least 0.5; and a cation equivalent expressed as a monovalent cation species, $M^+/Al$, from 0.85 to 1.1 and the characteristic crystal structure of zeolite Y as indicated by an X-ray powder diffraction pattern having at least the d-spacings set forth broadly in Table A.

7. The cracking catalyst of claim 6 wherein the change in defect structure Δz is less than 0.05.

8. The cracking catalyst of claim 6 wherein

$$\frac{b+(N-\Delta z)}{a-N}$$

has a value greater than 6.0 and less than 8.0.

9. The cracking catalyst, obtainable by a process wherein a zeolitic aluminosilicate which has a mole ratio of oxide in the dehydrated state of

$$(0.85-1.1)M_{2/n}O:Al_2O_3:x\ SiO_2$$

wherein M is a cation having a valence of "n", "x" has a value greater than 6.0, has an X-ray powder diffraction pattern having at least the d-spacings of Table A of claim 1, has extraneous silicon atoms in the crystal lattice in the form of framework $SiO_4$ tetrahedra, has been treated by employing at least one of the following steps comprising:

(i) treating the aluminosilicate at a temperature of 300°C for a time greater than 0.1 hour, preferably between 0.1 and about 10 hours,
(ii) ion-exchanging the aluminosilicate with at least one multivalent cation; and
(iii) treatment with both steps (i) and (ii)

with the proviso that steps (i) and (ii) be carried out one or more times in any order.

10. The cracking catalyst of claim 9 wherein the aluminosilicate has been ion-exchanged with a multivalent cation selected from the group consisting of Group IIA, cerium, lanthanum, praseodymium, neodymium, promethium, samarium, europium, gadolinium, terbium, dysprosium, holmium, erbium, thulium, ytterbium, lutetium and mixtures thereof.

11. The cracking catalyst of claim 9 wherein "x" has a value greater than 6.0 and less than 8.0.

12. The cracking catalyst of claim 9 wherein the zeolitic aluminosilicate is defined as having a chemical composition expressed in terms of mole fractions of framework tetrahedra as:

$$[Al_{(a-N)}Si_{b+(N-\Delta z)}\square_z]O_2$$

wherein

$$\frac{b+(N-\Delta z)}{a-N}$$

has a value greater than 6.0 the change in defect structure factor $\Delta z$ is less than 0.08; an increased silicon content in the framework,

$$\frac{(N-\Delta z)}{N},$$

of at least 0.5; and a cation equivalent expressed as a monovalent cation species, $M^+/Al$, from 0.85 to 1.1 and the characteristic crystal structure of zeolite Y as indicated by an X-ray powder diffraction pattern having at least the d-spacings set forth broadly in Table A.

13. The cracking catalyst of claim 12 wherein the change in defect structure $\Delta z$ is less than 0.05.

14. The cracking catalyst of claim 12 wherein the cation equivalent expresses an multivalent cation species, $M^{+n}/Al$, where n is 2 or 3.

15. The cracking catalyst of claim 12 wherein

$$\frac{b+(N-\Delta z)}{a-N}$$

is greater than 6.0 and less than 8.0.

16. The cracking catalyst of claim 12 wherein the zeolite aluminosilicate has been ion-exchanged with a multivalent cation from the class consisting of cerium, lanthanum, praseodymium, neodymium, promethium, samarium, europium, gadolinium, terbium, dysprosium, holmium, erbium, thulium, ytterbium, lutetium and mixtures thereof.

17. Use of the cracking catalyst of any of the preceding claims for cracking a hydrocarbon feedstock to produce lower boiling hydrocarbons.

18. Use according to claim 17 by contacting a hydrocarbon feedstock boiling between 216°C and about 593°C with the cracking catalyst at a temperature between about 371°C and about 704°C at a gauge pressure between about 1 bar to about 7 bar.

**Patentansprüche**

1. Crack-Katalysator, erhältlich nach einem Verfahren, welches die Behandlung eines Zeolith-Alumosilikats umfasst, das im dehydratisierten Zustand ein Oxid-Molverhältnis von

$$(0{,}85-1{,}1)M_{2/n}O:Al_2O_3:x\ SiO_2$$

hat, wobei M ein Kation der Valenz "n" ist, "x" einen Wert größer als 6,0 besitzt, das ein Pulverröntgendiffraktogramm mit mindestens den d-Abständen der nachfolgenden Tabelle A besitzt

TABELLE A

| d($10^{-4}$ µm) | Intensität |
|---|---|
| 14,3 —13,97 | sehr stark |
| 8,71— 8,55 | mittel |
| 7,43— 7,30 | mittel |
| 5,66— 5,55 | stark |
| 4,75— 4,66 | mittel |
| 4,36— 4,28 | mittel |
| 3,75— 3,69 | stark |
| 3,30— 3,23 | stark |
| 2,85— 2,79 | stark |

und im Kristallgitter Fremdsiliciumatome in Form von Gitter-$SiO_4$-Tetraedern aufweist, durch Anwendung von mindestens einem der folgenden Schritte:

(i) Behandlung des Alumosilikats bei einer Temperatur von 300°C für eine Zeit länger als 0,1 Stunden, vorzugsweise zwischen 0,1 und etwa 10 Stunden,
(ii) Versorgen mit einer wirksamen Menge von mindestens einem mehrwertigen Kation, das aus der Klasse ausgewählt ist, die aus der Gruppe IIA, Cer, Lanthan, Praseodym, Neodym, Promethium, Samarium, Europium, Gadolinium, Terbium, Dysprosium, Holmium, Erbium, Thulium, Ytterbium, Lutétium und Mischungen davon besteht,

mit der Bedingung, daß die Schritte (i) und (ii) einmal oder mehrmalig in beliebiger Reihenfolge ausgeführt werden können.

2. Crack-Katalysator nach Anspruch 1, bei dem das zeolithische Alumosilikat definiert ist durch die chemische Zusammensetzung, ausgedrückt als Molfraktionen der Gittertetraeder nach der Formel

$$[Al_{(a-N)}Si_{b+(N-\Delta z)}\square_z]O_2$$

in der

$$\frac{b+(N-\Delta z)}{a-N}$$

einen Wert größer als 6 besitzt, die Änderung des Defektstrukturfaktors $\Delta z$ geringer ist als 0,08, wobei ein erhöhter Siliciumgehalt im Gitter,

$$\frac{(N-\Delta z)}{N},$$

von mindestens 0,5 vorliegt, wobei ein Kationäquivalent, ausgedrückt als einwertige Kationenspezies, $M^+$/Al, von 0,85 bis 1,1 und die charakteristische Kristallstruktur von Zeolith Y, wie angegeben durch ein Röntgenpulverdiffraktogramm mit mindestens den d-Abständen der nachfolgenden Tabelle A, vorliegt.

3. Crack-Katalysator nach Anspruch 1, bei dem das Alumosilikat einmal oder mehrfach mit Ammonium ausgetauscht wird.

4. Crack-Katalysator, der ein zeolithisches Alumosilikat enthält, welches ein Oxid-Molverhältnis im dehydratisierten Zustand von

$$(0{,}85-1{,}1)M_{2/n}O:Al_2O_3:x\ SiO_2$$

besitzt, wobei M ein Kation der Wertigkeit "n" ist, "x" ein Wert größer als 6,0 besitzt, das ein Röntgenpulverdiffraktogramm mit mindestens den d-Abständen der Tabelle A aus Anspruch 1 enthält, das Fremdsiliciumatome im Kristallgitter in Form von Gitter-$SiO_4$-Tetraedern enthält, wobei das genannte zeolithische Alumosilikat zwischen etwa 5 und etwa 80% ausgetauscht ist mit Kationen, die ausgewählt sind aus der Gruppe IIA, Cer, Lanthan, Praseodym, Neodym, Promethium, Samarium, Europium, Gadolinium, Terbium, Dysprosium, Holmium, Erbium, Thulium, Ytterbium, Lutetium und Mischungen davon.

5. Crack-Katalysator nach Anspruch 4, bei dem der Wert von "x" größer als 6,0 und geringer als 8,0 ist.

6. Crack-Katalysator nach Anspruch 4, bei dem das zeolithische Alumosilikat definiert ist durch eine chemische Zusammensetzung, ausgedrückt als Molfraktionen der Gittertetraeder gemäß:

$$[Al_{(a-N)}Si_{b+(N-\Delta z)}\square_z]O_2$$

wobei

$$\frac{b+(N-\Delta z)}{a-N}$$

einen Wert größer als 6,0 hat, die Änderung des Defektstrukturfaktors $\Delta z$ geringer als 0,08 ist, ein erhöhter Siliciumgehalt im Gitter,

$$\frac{(N-\Delta z)}{N},$$

von mindestens 0,5 vorliegt, und ein Kationäquivalent, ausgedrückt als einwertige Kationenspezies, $M^+/Al$, von 0,85 bis 1,1 und die charakteristische Gitterstruktur von Zeolith Y, wie angegeben durch ein Pulverröntgendiffraktogramm mit mindestens den d-Abständen der Tabelle A, vorliegt.

7. Crack-Katalysator nach Anspruch 6, bei dem die Änderung des Defektstrukturfaktors $\Delta z$ geringer als 0,05 ist.

8. Crack-Katalysator nach Anspruch 6, bei dem

$$\frac{b+(N-\Delta z)}{a-N}$$

einen Wert größer als 6,0 und geringer als 8,0 besitzt.

9. Crack-Katalysator, erhältlich durch ein Verfahren, bei dem ein zeolithisches Alumosilikat behandelt wird, welches ein Oxid-Molverhältnis im dehydratisierten Zustand von

$$(0{,}85-1{,}1)M_{2/n}O:Al_2O_3:x\ SiO_2$$

besitzt, wobei M ein Kation der Wertigkeit "n" ist, "x" ein Wert größer als 6,0 aufweist, welches ein Röntgenpulverdiffraktogramm mit mindestens den d-Abständen der Tabelle A aus Anspruch 1 und Fremdsiliciumatome im Kristallgitter in Form von Gitter-$SiO_4$-Tetraedern aufweist, durch Anwendung von mindestens einem der nachfolgenden Schritte, die umfassen:

(i) Behandlung des Alumosilikats bei einer Temperatur von 300°C für eine Zeitdauer länger als 0,1 Stunden, vorzugsweise zwischen 0,1 und etwa 10 Stunden,
(ii) Ionenaustausch des Alumosilikats mit mindestens einem mehrwertigen Kation und
(iii) Behandlung nach beiden Schritten (i) und (ii)

mit der Bedingung, daß die Schritte (i) und (ii) einmal oder mehrfach in beliebiger Reihenfolge ausgeführt werden.

10. Crack-Katalysator nach Anspruch 9, bei dem das Alumosilikat einem Ionenaustausch unterworfen wird mit einem mehrwertigen Kation, das aus der Gruppe ausgewählt wird, die aus der Gruppe IIA, Cer, Lanthan, Praseodym, Neodym, Promethium, Samarium, Europium, Gadolinium, Terbium, Dysprosium, Holmium, Erbium, Thulium, Ytterbium, Lutetium und Mischungen davon besteht.

11. Crack-Katalysator nach Anspruch 9, bei dem "x" einen Wert größer als 6,0 und kleiner als 8,0 aufweist.

12. Crack-Katalysator nach Anspruch 9, bei dem das zeolithische Alumosilikat definiert ist durch eine chemische Zusammensetzung, ausgedrückt als Molfraktionen der Gittertetraeder gemäß der Formel

$$[Al_{(a-N)}Si_{b+(N-\Delta z)}\square_z]O_2$$

in der

$$\frac{b+(N\Delta z)}{a-N}$$

einen Wert größer als 6,0 aufweist, die Änderung des Defektstrukturfaktors Δz geringer als 0,08 ist, ein erhöhter Siliciumgehalt im Gitter,

$$\frac{(N-\Delta z)}{N},$$

von mindestens 0,5 und ein Kationäquivalent, ausgedrückt als monovalente Kationspezies, $M^+/Al$, von 0,85 bis 1,1 und die charakteristische Kristallstruktur von Zeolith Y, wie angegeben durch ein Pulverröntgendiffraktogramm mit mindestens den d-Abständen der Tabelle A, vorliegen.

13. Crack-Katalysator nach Anspruch 12, bei dem die Änderung der Defektstruktur Δz geringer als 0,05 ist.

14. Crack-Katalysator nach Anspruch 12, bei dem das Kationäquivalent eine mehrwertige Kationenspezies, $M^{+n}/Al$, ausdrückt, wobei n 2 oder 3 ist.

15. Crack-Katalysator nach Anspruch 12, wobei

$$\frac{b+(N-\Delta z)}{a-N}$$

größer als 6,0 und kleiner als 8,0 ist.

16. Crack-Katalysator nach Anspruch 12, wobei das zeolithische Alumosilikat mit einem mehrwertigen Kation ausgetauscht wird aus der Klasse, die besteht aus Cer, Lantham, Praseodym, Neodym, Promethium, Samarium, Europium, Gadolinium, Terbium, Dysprosium, Holmium, Erbium, Thulium, Ytterbium, Lutetium und Mischungen davon.

17. Verwendung des Crack-Katalysators nach einem der vorangehenden Ansprüche zum Cracken eines Kohlenwasserstoffeinsatzmaterials zur Herstellung von Kohlenwasserstoffen mit einem. niedrigeren Siedepunkt.

18. Verwendung gemäß Anspruch 17 durch Inkontaktbringen eines Kohlenwasserstoffeinsatzmaterials mit einem Siedepunkt zwischen 216°C und etwa 593°C mit dem Crack-Katalysator bei einer Temperatur zwischen 371°C und etwa 704°C und einem Überdruck zwischen etwa 1 bar und etwa 7 bar.

**Revendications**

1. Catalyseur de craquage pouvant être obtenu par un procédé comprenant le traitement d'un aluminosilicate zéolitique qui a la proportion molaire des oxydes à l'état déshydraté

$$(0,85-1,1)M_{2/n}O:Al_2O_3:x\ SiO_2$$

dans laquelle M est un cation ayant la valeur "n"; "x" a une valeur supérieure à 6,0, a un diagramme de diffraction des rayons X sur poudre présentant au moins les distances d du tableau A suivant

TABLEAU A

| d($10^{-4}$ µm) | Intensité |
|---|---|
| 14,3 —13,97 | très forte |
| 8,71— 8,55 | moyenne |
| 7,43— 7,30 | moyenne |
| 5,66— 5,55 | forte |
| 4,75— 4,66 | moyenne |
| 4,36— 4,28 | moyenne |
| 3,75— 3,69 | forte |
| 3,30— 3,23 | forte |
| 2,85— 2,79 | forte |

et a des atomes étrangers de silicium dans le réseau cristallin sous la forme de tétraèdres $SiO_4$ structuraux, en utilisant au moins l'une des étapes suivantes:

(i) traitement de l'aluminosilicate à une température de 300°C pendant une durée supérieure à 0,1 heure, de préférence comprise entre 0,1 et environ 10 heures,
(ii) apport d'une quantité efficace d'au moins un cation multivalent choisi dans la classe comprenant le Groupe IIA, le cérium, le lanthane, le praséodyme, le néodyme, le prométhium, le samarium, l'europium, le gadolinium, le terbium, le dysprosium, l'holmium, l'erbium, le thulium, l'ytterbium, le lutétium et leurs mélanges;

sous réserve que les étapes (i) et (ii) puissent être conduites une ou plusieurs fois dans un ordre quelconque.

2. Catalyseur de craquage suivant la revendication 1, dans lequel l'aluminosilicate zéolitique est défini comme ayant la composition chimique exprimée d'après les fractions molaires des tétraèdres structuraux:

$$[Al_{(a-N)}Si_{b+(N-\Delta z)}\square_z]O_2$$

où

$$\frac{b+(N-\Delta z)}{a-N}$$

a une valeur supérieure à 6, la variation du facteur de défaut de structure Δz est inférieure à 0,08; une teneur élevée en silicium dans l'ossature

$$\frac{(N-\Delta z)}{N},$$

d'au moins 0,5; et un équivalent cationique, exprimé comme type cationique monovalent, $M^+/Al$, de 0,85 à 1,1 et la structure cristalline caractéristique de zéolite Y telle qu'indiquée par un diagramme de diffraction des rayons X sur poudre ayant au moins les distances d'indiquées d'une façon générale sur le tableau A.

3. Catalyseur de craquage suivant la revendication 1, dans lequel l'aluminosilicate est traité une ou plusieurs fois par échange avec l'ion ammonium.

4. Catalyseur de craquage comprenant un aluminosilicate zéolitique qui a la proportion molaire d'oxydes, à l'état déshydraté:

$$(0,85-1,1)M_{2/n}O:Al_2O_3:x\ SiO_2$$

où M est un cation de valence "n"; "x" a une valeur supérieure à 6,0; a un diagramme de diffraction des rayons X sur poudre présentant au moins les distances d du tableau A de la revendication 1; a des atomes étrangers de silicium dans le réseau cristallin sous forme de tétraèdres de $SiO_4$ structuraux; ledit aluminosilicate zéolitique ayant entre environ 5 et environ 80% des cations d'échange ionique choisis dans

l'ensemble formé du Groupe IIA du cérium, du lanthane, du praséodyme, du néodyme, du prométhium, du samarium, de l'europium, du gadolinium, du terbium, du dysprosium, de l'holmium, de l'erbium, du thulium, de l'ytterbium, du lutétium et leurs mélanges.

5. Catalyseur de craquage suivant la revendication 4, dans lequel la valeur de "x" est supérieure à 6,0 et inférieure à 8,0.

6. Catalyseur de craquage suivant la revendication 4, dans lequel l'aluminosilicate zéolitique est défini comme ayant la composition chimique exprimée d'après les fractions molaires de tétraèdres structuraux

$$[Al_{(a-N)}Si_{b+(N-\Delta z)}\square_z]O_2$$

où

$$\frac{b+(N-\Delta z)}{a-N}$$

a une valeur supérieure à 6,0; la variation du facteur de défaut de structure Δz est inférieure à 0,08; une teneur élevée en silicium dans l'ossature,

$$\frac{(N-\Delta z)}{N},$$

d'au moins 0,5; et un équivalent cationique exprimé par le type cationique monovalent, $M^+/Al$, de 0,85 à 1,1 et la structure cristalline caractéristique de la zéolite Y comme indiqué par le diagramme de diffraction des rayons X sur poudre ayant au moins les distances d'indiquées d'une façon générale sur le tableau A.

7. Catalyseur de craquage suivant la revendication 6, dans lequel la variation de défaut de structure Δz est inférieure à 0,05.

8. Catalyseur de craquage suivant la revendication 6, dans lequel le rapport

$$\frac{b+(N-\Delta z)}{a-N}$$

a une valeur supérieure à 6,0 et inférieure à 8,0.

9. Catalyseur de craquage pouvant être obtenu par un procédé dans lequel un aluminosilicate zéolitique qui a la proportion molaire d'oxydes à l'état déshydraté

$$(0,85-1,1)M_{2/n}O:Al_2O_3:x\ SiO_2$$

dans laquelle M est un cation de valence "n", "x" a une valeur supérieure à 6,0, a un diagramme de diffraction des rayons X sur poudre présentant au moins les distances d du tableau A de la revendication 1, a des atomes étrangers de silicium dans le réseau cristallin sous la forme de tétraèdres de $SiO_4$ structuraux, a été traité en utilisant au moins l'une des étapes suivantes:

(i) traitement de l'aluminosilicate à une température de 300°C pendant une durée supérieure à 0,1 heure, de préférence comprise entre 0,1 et environ 10 heures,
(ii) échange ionique de l'aluminosilicate avec au moins un cation multivalent;
(iii) traitement suivant les deux étapes (i) et (ii)

sous réserve que les étapes (i) et (ii) soient mises en oeuvre une ou plusieurs fois dans un ordre quelconque.

10. Catalyseur de craquage suivant la revendication 9, dans lequel l'aluminosilicate a été traité par échange ionique avec un cation multivalent choisi dans l'ensemble comprenant le Groupe IIA, le cérium, le lanthane, le praséodyme, le néodyme, le prométhium, le samarium; l'europium, le gadolinium, le terbium, le dysprosium, l'holmium, l'erbium, le thulium, l'ytterbium, le lutétium et leurs mélanges.

11. Catalyseur de craquage suivant la revendication 9, dans lequel "x" a une valeur supérieure à 6,0 et inférieure à 8,0.

12. Catalyseur de craquage suivant la revendication 9, dans lequel l'aluminosilicate zéolitique est défini comme ayant la composition chimique exprimée d'après les fractions molaires de tétraèdres structuraux·

$$[Al_{(a-N)}Si_{b-(N-\Delta z)}\square_z]O_2$$

où

$$\frac{b+(N-\Delta z)}{a-N}$$

a une valeur supérieure à 6,0; la variation du facteur de défaut de structure $\Delta z$ est inférieure à 0,08; une teneur élevée en silicium dans l'ossature,

$$\frac{(N-\Delta z)}{N},$$

d'au moins 0,5; et un équivalent cationique exprimé par le type cationique monovalent, $M^+/Al$, de 0,85 à 1,1 et la structure cristalline caractéristique de la zéolite Y comme indiqué par le diagramme de diffraction des rayons X sur poudre ayant au moins les distances d'indiquées d'une façon générale sur le tableau A.

13. Catalyseur de craquage suivant la revendication 12, dans lequel la variation de défaut de structure $\Delta z$ est inférieure à 0,05.

14. Catalyseur de craquage suivant la revendication 12, dans lequel l'équivalent cationique exprime un type cationique multivalent $M^{+n}/Al$ où n à la valeur 2 ou 3.

15. Catalyseur de craquage suivant la revendication 12, dans lequel la quantité

$$\frac{b+(N\Delta z)}{a-N}$$

est supérieure à 6,0 et inférieure à 8,0.

16. Catalyseur de craquage suivant la revendication 12, dans lequel l'aluminosilicate zéolitique a été traité par échange ionique avec un cation multivalent choisi dans la classe comprenant le cérium, le lanthane, le praséodyme, le néodyme, le prométhium, le samarium, l'éuropium, le gadolinium, le terbium, le dysprosium, l'holmium, l'erbium, le thulium, l'ytterbium, le lutétium et leurs mélanges.

17. Utilisation du catalyseur de craquage suivant l'une quelconque des revendications précédentes, pour le craquage d'une charge hydrocarbonée afin de produire des hydrocarbures de plus bas point d'ébullition.

18. Utilisation suivant la revendication 17, par mise en contact d'une charge hydrocarbonée bouillant entre 216 et environ 593°C avec le catalyseur de craquage à une température comprise entre environ 371 et environ 704°C à une pression manométrique comprise entre environ 1 et environ 7 bars.